Europäisches Patentamt

European Patent Office

Office européen des brevets

(11) Numéro de publication: **0 072 715**

**A2**

# (12) DEMANDE DE BREVET EUROPEEN

(21) Numéro de dépôt: **82401127.4**

(22) Date de dépôt: **21.06.82**

(51) Int. Cl.³: **G 01 N 29/04**

(30) Priorité: **23.06.81 FR 8112334**

(43) Date de publication de la demande:
**23.02.83 Bulletin 83/8**

(84) Etats contractants désignés:
**AT BE CH DE GB IT LI LU NL SE**

(71) Demandeur: **MATIX INDUSTRIES (Société Anonyme)**
**59, rue Saint-Lazare**
**F-75009 Paris(FR)**

(72) Inventeur: **Turbe, Jean-Pierre**
**26, rue Fernand Collot**
**F-77100 Manteuil-les-Meaux(FR)**

(72) Inventeur: **Meignan, Bruno**
**8, rue de la Touarte Coupvray**
**F-77450 Esbly(FR)**

(74) Mandataire: **Laget, Jean-Loup et al,**
**Cabinet Pierre Loyer 18, Rue de Mogador**
**F-75009 Paris(FR)**

(54) Procédé et appareil de contrôle de rails par ultrasons.

(57) Procédé et appareil de contrôle de rails par échos d'ultrasons.

Le procédé et l'appareil selon l'invention consistent à émettre dans un rail (5) au moyen d'un palpeur (2) (émetteur-récepteur) à deux voies, des trains d'ondes ultrasonores alternativement selon une direction verticale et une direction oblique puis à recueillir les signaux d'émission et d'écho et à les traiter pour afficher simultanément les signaux d'écho selon les deux directions de sondage, sur un écran muni de deux rampes (Ro, R7) de diode électroluminescentes représentant lesdites directions, de telle sorte que le nombre et la position des diodes allumées indiquent en clair, pour la zone sondée, l'épaisseur du rail et/ou la présence d'un trou d'éclisse et/ou la position et la nature de défauts internes du rail.

./...

EP 0 072 715 A2

Fig.4

- 1 -

Procédé et appareil de contrôle de rails par ultrasons.

L'invention concerne un procédé et un appareil de contrôle de rails non destructifs, par ultrasons.

Il est connu de contrôler de manière non destructive des pièces métalliques par la technique des ultrasons.

Il est possible d'effectuer des sondages par transmission ou par écho et de recueillir des signaux sonores et/ou visualiser lesdits signaux sur un écran cathodique.

La technique de sondage par échos d'ultrasons consiste à placer sur la pièce à sonder un palpeur émetteur-récepteur d'ultrasons ou deux palpeurs distincts respectivement d'émission et de réception et de visualiser les signaux d'échos par un affichage cathodique.

Les oscillogrammes obtenus par cette technique peuvent être classiquement des représentations à une dimension avec en ordonnées l'intensité des échos et en abscisses le temps de parcours ou encore des représentations montrant schématiquement une coupe de la pièce ou, de manière plus sophistiquée, des vues en plan de la pièce au moyen d'une synchronisation du balayage et de la position du palpeur.

Jusqu'à présent, c'est la technique de sondage par échos d'ultra- sons avec visualisation cathodique qui a été retenue pour le contrôle des rails.

Cette méthode présente l'avantage d'être simple dans le maniement des appareils et offre une sécurité absolue pour les utilisateurs étant donné l'innocuité des ultra-sons.

Toutefois, les appareils connus ont l'inconvénient d'être encombrants, ce qui est particulièrement gênant pour le contrôle sur place.

En outre, et surtout, si cette méthode permet de connaître avec une bonne précision la localisation, le type et les dimensions des défauts rencontrés, l'interprétation des résultats ainsi visualisés sur l'écran cathodique nécessite une formation très poussée. En effet, il faut savoir tenir compte des différences d'ondes acoustiques, des niveaux de mesure, des fréquences utilisées, des angles, etc.

C'est notamment pourquoi l'invention propose un procédé simple et un appareil facile à utiliser ne nécessitant pas de connaissances particulières et ayant en outre une bonne autonomie et des dimensions et un poids particulièrement réduits.

Le procédé selon l'invention est remarquable en ce qu'il consiste à émettre dans le rail des trains d'ondes ultrasonores alternativement selon une direction verticale et une direction oblique, puis à recueillir les signaux d'émission et les signaux d'écho et à les traiter pour afficher sur un écran simultanément les signaux d'écho selon les deux directions d'émission.

Un mode préféré selon l'invention est remarquable en ce qu'il consiste à afficher les signaux d'écho sur un écran muni de deux rampes de diodes électroluminescentes représentant les deux directions de sondage de telle sorte que le nombre et la position des diodes allumées indiquent en clair pour la zone sondée, l'épaisseur du rail et/ou la présence et la position d'un trou d'éclisse et/ou la position et la nature de défauts internes du rail.

Pour la mise en oeuvre de ce procédé, l'invention prévoit un appareil de contrôle remarquable en ce qu'il comporte un palpeur émetteur-récepteur d'ultrasons à deux voies destiné à émettre des trains d'ondes ultrasonores alternativement selon une direction verticale et une direction oblique, des moyens électroniques de commande d'émission et des moyens de réception des signaux d'écho du palpeur, des moyens de traitement et de mesure des signaux et des moyens d'affichage des signaux d'écho simultanément pour les deux directions de sondage.

De préférence, dans ce cas, les moyens d'affichage comportent un écran muni de deux rampes formées chacune d'une pluralité de diodes électroluminescentes et représentant les deux directions de sondage dans le rail tandis que les moyens de traitement et de mesure des signaux sont aménagés pour permettre d'allumer sélectivement les diodes de façon telle que le nombre et la position desdites diodes allumées indiquent en clair pour la zone sondée l'épaisseur du rail et/ou la présence d'un trou d'éclisse et/ou la position et la nature de défauts internes du rail.

L'invention sera mieux comprise et d'autres particularités apparaîtront à la lecture de la description qui va suivre et qui se réfère au dessin annexé dans lequel :

La figure 1 schématise l'appareil selon l'invention et ses accessoires,

La figure 2 montre, à titre d'exemple, un schéma de l'électronique de l'appareil,

La figure 3 est un relevé des divers signaux rencontrés dans le schéma de la figure 2,

La figure 4 montre divers affichages possibles en fonction de plusieurs positions du palpeur sur un rail, schématisées sur la même figure.

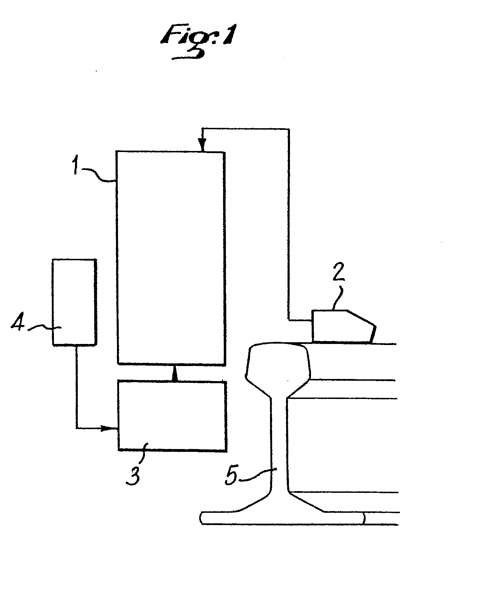

L'appareil, selon l'invention, schématisé sur la figure 1, comporte une électronique 1 de commande et d'affichage des résultats à laquelle est connecté un palpeur 2, et une batterie d'alimentation 3 rechargeable par un chargeur 4, le palpeur étant disposé sur un rail schématisé en 5.

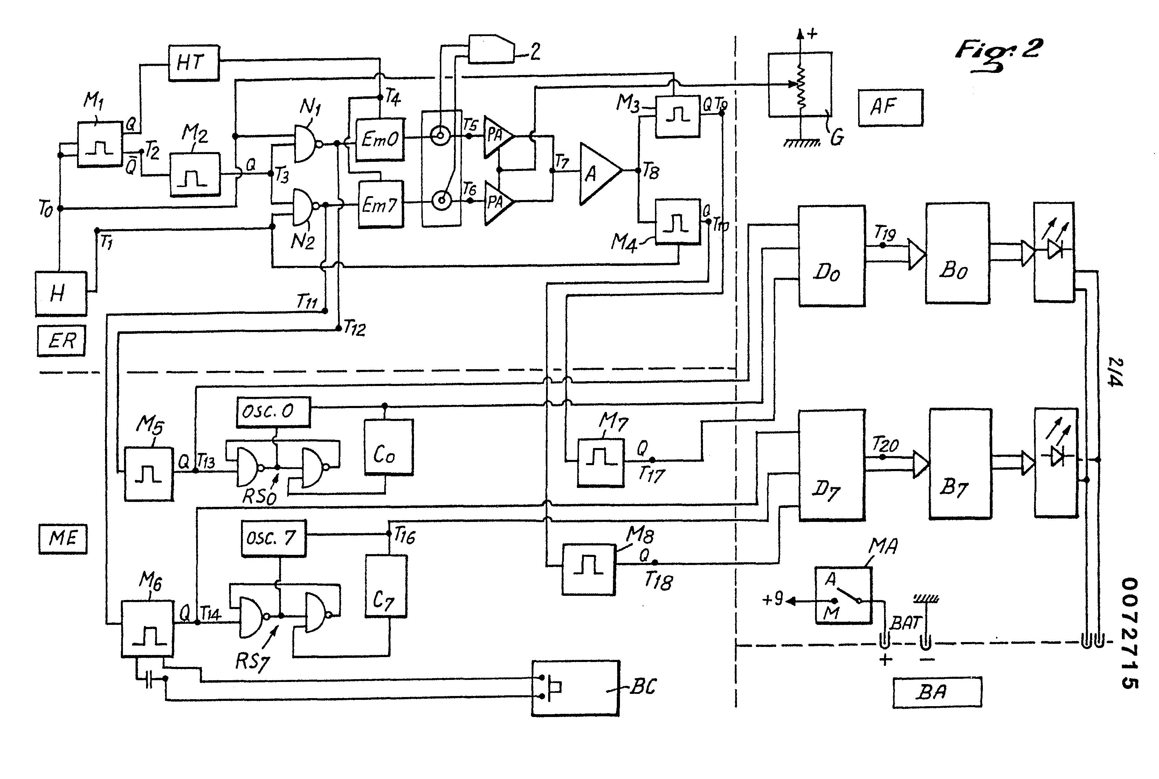

L'électronique de l'appareil (figure 2) peut se diviser en trois cartes respectivement d'émission-réception, de mesure et d'affichage, séparées sur le schéma de la figure 2 par des traits interrompus et mentionnées ER, ME et AF.

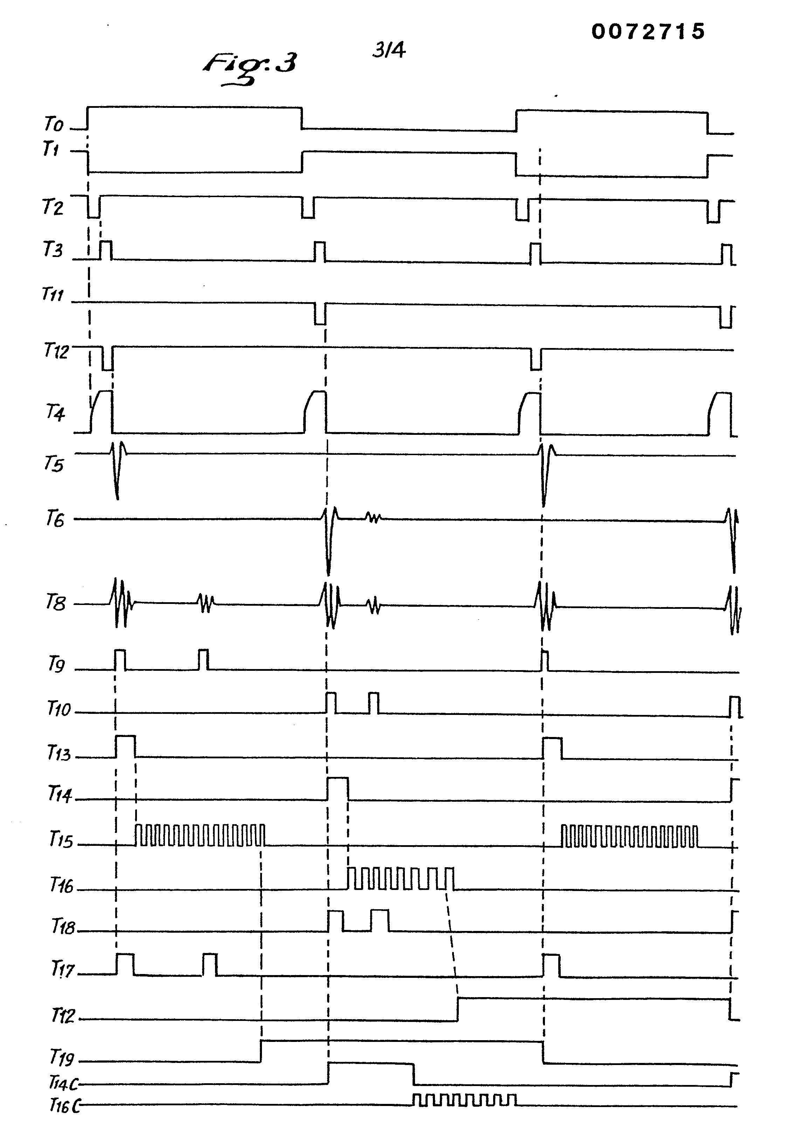

La carte ER comporte un oscillateur ou horloge H qui délivre deux signaux To et Tl (figure 3) logiquement complémentaires. Le signal To attaque une bascule monostable M1 qui délivre deux signaux complémentaires dont l'un, T2, est mis en forme par un monostable M2 pour former le signal T3. Le signal T3 arrive à l'une des deux entrées de deux portes NAND N1 et N2 dont les autres entrées sont connectées respectivement aux sorties To et Tl de l'oscillateur H.

Les signaux de sortie (T12, T11) des portes N1 et N2 (avec donc $T12 = \overline{T3.To}$ et $T11 = \overline{T3.TI}$) viennent commander des émetteurs respectivement Emo et Em7 dont les thyristors d'émetteur sont déclanchés par le signal T4 provenant d'une alimentation HT connectée à la sortie complémentaire de T2 du monostable M1.

Les émetteurs Emo et Em7 possèdent chacun un canal de sortie pour le branchement du palpeur à deux voies schématisé en 2 sur la figure 2. Le palpeur émet ainsi deux trains d'ondes ultrasonores alternativement selon une direction verticale (au moyen de Emo) et selon une direction oblique (au moyen de Em7).

La direction oblique choisie est ici de 70°, d'où les chiffres 0 et 7 accompagnant certaines lettres de référence. A titre d'exemple, la fréquence d'émission dans la direction verticale est 4MHz et dans la direction de 70° : 2,5 MHz, tandis que la fréquence de récurrence est de 150 Hz. Les signaux d'émission et de réception pour chaque voie, respectivement T5 et T6 sont amplifiés par des préamplificateurs PA à commande unique de gain. Les signaux ainsi obtenus sont mélangés en T7 et amplifiés au moyen d'un amplificateur A qui délivre le signal T8. Ce dernier montre bien sur le relevé de la figure 3, les signaux d'émission et des signaux d'écho.

La sortie de l'amplificateur A est connectée à deux monostables M3 et M4 commandés respectivement par les signaux To et T1 de l'oscillateur H de manière à séparer de nouveau les signaux des deux voies qui deviennent T9 et T10.

La carte mesure ME comporte deux oscillateurs OSC.0 et OSC.7 destinés à traiter les deux voies distinctement étant donné la différence entre les vitesses de propagation des ondes de direction verticale (ondes longitudinales) et celles de direction oblique (ondes transversales). Les oscillateurs OSC.0 et OSC.7 sont déclenchés par les signaux T12, T11 de porte d'émission, décalés par des circuits à retard afin de compenser le temps de parcours des ondes dans l'écran de protection du palpeur.

Les signaux T12 et T11 sont d'abord transformés par les monostables M5 et M6 et forment des signaux T13 et T14 qui attaquent des bascules RS respectivement RSO et RS7 destinées à déclancher les oscillateurs, tandis que des compteurs Co et C7 sont destinés à lire respectivement, dans cet exemple, jusqu'à 16 et 8 et à arrêter les bascules correspondantes RSO et RS7.

La carte ME comporte en outre des monostables M7 et M8 pour la mise en forme des signaux T9 et T10 qui deviennent respectivement en sortie T17 et T18.

La carte d'affichage AF comporte deux registres à décalage Do et D7 munis respectivement de 16 et 8 sorties.

Les registres Do et D7 reçoivent en donnée respectivement les signaux T17 et T18 ainsi que les signaux T15 et T16 de sortie des oscillateurs OSC.0 et OSC.7 constituant ainsi des signaux d'horloge, tandis que les fronts montant des signaux T13, T14 des monostables M5 et M6 dont les sorties sont aussi connectées auxdits registres remettent ces derniers à zéro.

Comme le montre le relevé de la figure 3, les registres à décalage

Do et D7 décalent les signaux d'écho du nombre de pas d'horloge qui sont après lui (voir T19 par rapport à T15 et T17 de même que T20 par rapport à T16 et T18). A partir du dernier front montant des signaux d'horloge T15 et T16, les signaux T19 et T20 sont au niveau haut jusqu'à la remise à zéro par respectivement T13 et T14 de telle sorte qu'il s'écoule un temps suffisamment long pour allumer la diode sélectionnée par l'écho comme il sera dit ci-après.

Les registres Do et D7 possèdent en effet dans cet exemple, respectivement 16 et 8 sorties pour pouvoir allumer un nombre correspondant de diodes par l'intermédiaire des registres tampons ou Buffers Bo et B1, les diodes effectivement allumées étant celles sélectionnées par les signaux d'écho de chaque voie.

Le schéma de la figure 2 montre également un bouton marche-arrêt MA connecté à la batterie d'alimentation schématisé en BA, ainsi qu'un bouton de calibrage BC sous la forme d'un poussoir à relachement et dont il sera question plus loin.

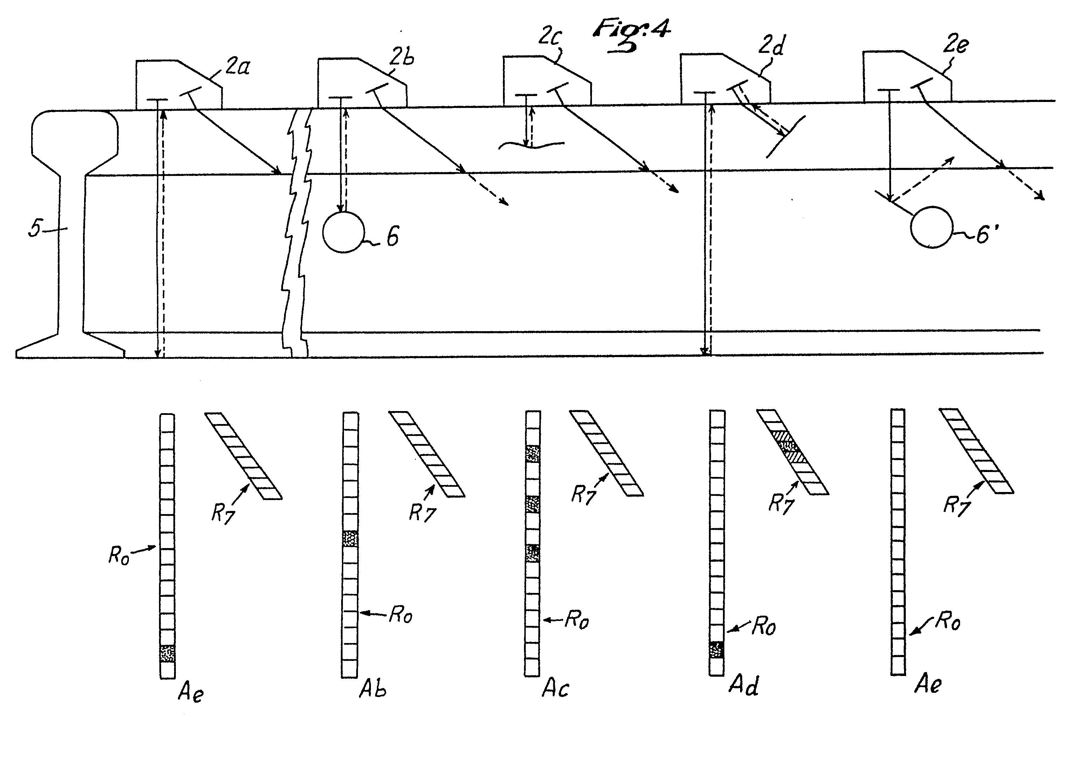

L'affichage et l'interprétation des résultats se comprennent aisément par le croquis de la figure 4.

L'écran à diodes électroluminescentes ou LED comporte deux rampes RO et R7 formées d'une pluralité de diodes et disposées l'une verticalement (16 diodes) et l'autre obliquement (8 diodes) pour visualiser les résultats simultanément, par mémorisation de l'allumage des diodes, et respectivement selon la voie de sondage verticale et la voie de sondage oblique.

Le croquis de la figure 4 montre en effet 5 positions d'un palpeur 2 (2a à 2e) sur un rail 5 et l'affichage correspondant Aa et Ae des diodes sur l'écran.

Dans la position 2a du palpeur, l'affichage Aa montre une seule diode allumée sur la rampe verticale et qui correspond à l'écho du fond, c'est-à-dire à la visualisation de la hauteur du rail, par exemple 150 mm.

Dans la position 2b, l'affichage Ab montre aussi une seule diode allumée mais au milieu de la rampe verticale, l'écho de fond ayant disparu. Cet affichage est facilement interprété comme la visualisation d'un trou d'éclisse 6.

Dans la position 2c, plusieurs diodes sont allumées sur la rampe verticale avec disparition aussi de l'écho de fond. Il s'agit ici d'échos multiples résultant d'une fissure sensiblement horizontale dans la tête du rail.

Dans la position 2d, l'écho de fond apparaît bien sur la rampe verticale et/ou l'allumage successif de diodes de la rampe oblique indiquent la présence d'une fissure transversale de la tête du rail, en déplaçant la sonde.

Enfin, dans la position 2e, la disparition de l'écho de fond, sans qu'aucune autre diode ne soit allumée indique la présence d'une étoilure au niveau par exemple d'un trou d'éclisse 6'.

Comme on peut le constater sur la figure 4, l'interprétation des résultats est simple et la localisation des défauts précis, par une disposition des rampes selon les deux directions de sondage et schématisant le rail.

Pour faciliter encore cette interprétation, les diodes en bas de la rampe verticale (par exemple les trois dernières) et les diodes du milieu (par exemple deux) sont de couleur verte, tandis que toutes les autres sont oranges, de manière à distinguer l'affichage de la hauteur du rail et la visualisation de trous d'éclisse par rapport à la visualisation d'un défaut.

Il est en outre possible de prévoir également un bruiteur actionné par certains signaux d'écho de manière à attirer l'attention de l'utilisateur sur la présence de défauts.

Enfin, l'invention prévoit au moins un bouton de calibrage ou de contrôle BC (figure 2). Ce bouton à poussoir prévu ici pour la voie oblique est destiné à introduire un retard artificiel du signal

**0072715**

T16 par l'allongement du signal T14 au moyen de l'introduction dans le circuit du monostable M6 d'un condensateur (voir signaux T14C et T16C de la figure 3).

Ceci permet d'allumer sur la rampe oblique une diode correspondant à un trou d'éclisse.

Ce moyen permet un contrôle du bon fonctionnement de la voie oblique. En voie verticale, le contrôle est facilement effectué en visualisant le pied du rail à l'aide d'une diode verte sur l'échelle de mesure verticale.

De nombreuses modifications ou variantes peuvent évidemment être apportées au mode de réalisation décrit sans sortir du cadre de l'invention.

REVENDICATIONS

1. Procédé de contrôle de rails par échos d'ultrasons, caractérisé en ce qu'il consiste à émettre dans le rail des trains d'ondes ultrasonores alternativement selon une direction verticale et une direction oblique, puis à recueillir les signaux d'émission et les signaux d'écho et à les traiter pour afficher sur un écran simultanément les signaux d'écho selon les deux directions d'émission.

2. Procédé selon la revendication 1, caractérisé en ce qu'il consiste à afficher les signaux d'écho sur un écran muni de deux rampes de diodes électroluminescentes représentant les deux directions de sondage de telle sorte que le nombre et la position des diodes allumées indiquent en clair pour la zone sondée, l'épaisseur du rail et/ou la présence et la position d'un trou d'éclisse et/ou la position et la nature de défauts internes du rail.

3. Appareil de contrôle de rails par échos d'ultrasons, caractérisé en ce qu'il comporte un palpeur (2) émetteur-récepteur d'ultrasons à deux voies destiné à émettre des trains d'ondes ultrasonores alternativement selon une direction verticale et une direction oblique, des moyens électroniques de commande d'émission et des moyens de réception des signaux d'écho du palpeur, des moyens de traitement et de mesure des signaux, et des moyens d'affichage des signaux d'écho simultanément pour les deux directions de sondage.

4. Appareil de contrôle de rails selon la revendication 3, caractérisé en ce que les moyens d'affichage comportent un écran muni de deux rampes (Ro, R7) formées chacune d'une pluralité de diodes électroluminescentes et représentant les deux directions de sondage dans le rail tandis que les moyens de traitement et de mesure des signaux sont aménagés pour permettre d'allumer sélectivement les diodes de façon telle que le nombre et la position desdites diodes allumées indiquent en clair, pour la zone sondée, l'épaisseur du rail et/ou la présence d'un trou d'éclisse (6, 6') et/ou la position et la nature de défauts internes du rail.

5. Appareil de contrôle de rails selon l'une des revendications 3 et 4, caractérisé en ce que les moyens de commande d'émission comportent un oscillateur ou horloge (H) à deux sorties qui délivre deux signaux crénaux complémentaires (To, T1) traités par des bascules et des portes logiques (M1, M2, N1, N2) de manière à former deux signaux (T12, T11) alternés qui sont destinés à déclencher deux émetteurs (Emo, Em7) connectés au palpeur (2) à deux voies pour créer des trains d'ondes alternés dans des directions respectivement verticale et oblique.

6. Appareil de contrôle de rails selon la revendication 5, caractérisé par les moyens de réception des signaux d'écho du palpeur comportant deux préamplificateurs (PA) à commande unique de gain (G) et destinés à amplifier les signaux (T5, T6) d'émission et de réception de chaque voie séparément, un amplificateur (A) pour l'ensemble desdits signaux dont la sortie est connectée à deux bascules (M3, M4) commandées respectivement par les signaux de sortie (To, T1) de l'oscillateur (H) de manière à séparer et mettre en forme les signaux d'émission et d'écho (T9, T10) de chaque voie.

7. Appareil de contrôle de rails, selon l'ensemble des revendications 5 et 6, caractérisé en ce que les moyens de traitement et de mesure des signaux comportent deux oscillateurs (OSC.O, OSC.7) déclenchés respectivement par les signaux (T12, T11) de commande d'émetteurs et par l'intermédiaire et pour chacun d'un monostable (M5, M6), d'une bascule RS (RSo, RS7) et d'un compteur (Co, C7).

8. Appareil de contrôle de rails, selon l'ensemble des revendications 3 à 7, caractérisé en ce que les moyens d'affichage comportent deux registres à décalage (Do, D7) qui reçoivent respectivement les signaux d'émission et d'écho (T9, T10) des deux voies, convenablement mis en forme par des monostables (M7, M8) ainsi que les signaux (T15, T16) des deux oscillateurs (OSC.O, OSC.7) servant d'horloges et les signaux (T13, T14) de déclenchement desdits oscillateurs et destinés à la remise à zéro des registres, ces derniers étant en outre munis d'une pluralité de sorties pour pouvoir allumer un nombre correspondant de diodes par l'intermédiaire, pour chacun, d'un registre tampon (Bo, B7), les diodes

3  **0072715**

effectivement allumées étant celles ainsi sélectionnées par les signaux d'écho de chaque voie.

9. Appareil selon l'une des revendications 3 à 8, caractérisé en ce qu'un bruiteur actionné par les signaux d'au moins certains échos est prévu pour indiquer de manière auditive la présence d'un défaut.

10. Appareil selon l'une des revendications 4 à 9, caractérisé en ce qu'un moyen de calibrage (BC) est prévu pour entraîner un décalage dans les signaux de commande d'affichage pour la direction de sondage oblique, de manière à permettre d'allumer certaines diodes de visualisation qui représentent la détection du trou d'éclisse.

11. Appareil selon l'une des revendications 4 à 10, caractérisé en ce que certaines diodes de la rampe (Ro) représentant le sondage vertical, sont de couleur différente des autres lorsqu'elles correspondent, d'après leurs positions, à la hauteur du rail (écho de fond) ou à la présence d'un trou d'éclisse.

Fig.1

Fig.2

Fig.3    3/4    0072715

0072715

Fig. 4